# EUROPEAN PATENT APPLICATION

(11) **EP 2 490 204 A1**
(43) Date of publication of application: **22.08.2012**
(21) Application number: 10823237.2
(22) Date of filing: 30.07.2010
(51) Int. Cl.: G09F 3/16, H01B 7/36, H02G 1/00, H02G 1/06

(54) **CORD IDENTIFICATION TAG AND METHOD FOR ATTACHING IDENTIFICATION TAG**

(30) Priority: 15.10.2009 JP 2009237939; 04.02.2010 JP 2010022722
(71) Applicant: Fujikura, Ltd., Tokyo 135-8512 (JP)
(72) Inventor: OHNISHI, Hiroya, Sakura-shi Chiba 285-8550 (JP)
(74) Representative: Heine, Christian Klaus
(86) International application number: PCT/JP2010/062895
(87) International publication number: WO 2011/045969

(57) **Abstract**

The invention is to provide a cord-identification tag which is to be attached to an optical cord and which is an integrally-molded resin product, the cord-identification tag including: a flat display section which includes a display surface displaying cord-identification information, a neck section which extends from the display section parallel to the display surface and whose width is smaller than that of the display section, and a cord-holding section which is included in the end of the neck section. The cord-holding section includes a curved wall which has an opening as seen from the longitudinal direction of the neck section.

## Description

### Technical Field

This invention relates to a cord-identification tag which is used for identifying an optical cord (optical fiber cord), and in particular relates to a cord-identification tag and a method for attaching an identification tag which is preferably applied to thin optical cords having a diameter of about 2 mm when the cords are placed in a high-density manner.

### Background Art

Generally, in a fiber termination module installed in a telephone office, a quite a large number of optical cords are placed closely. Therefore, it is necessary to identify these optical cords. For this identification, a cord-identification tag which is for identifying optical cords is commonly attached to each of the optical cords.

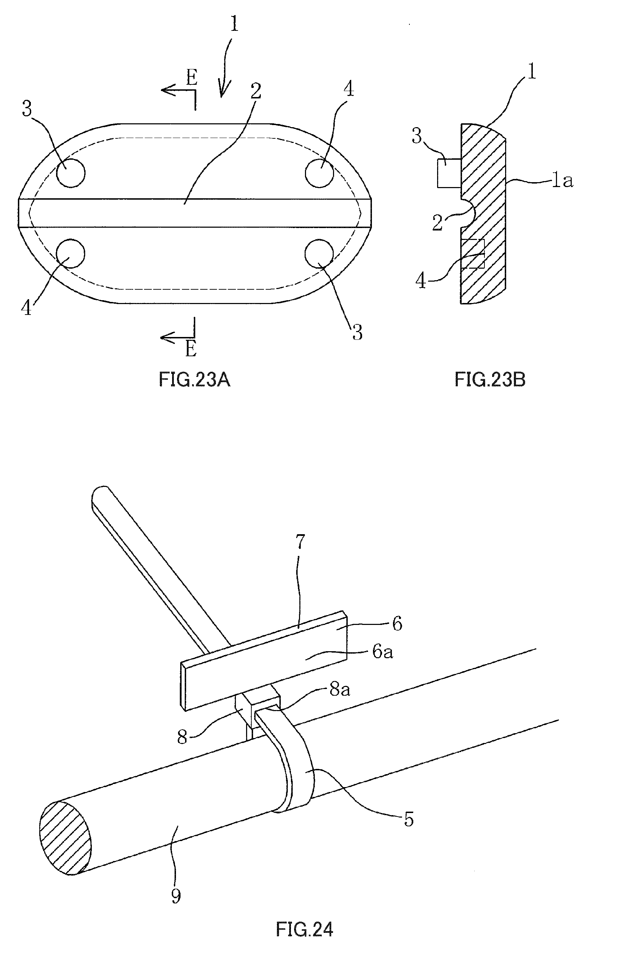

In some cases in which multiple optical cords, electric wires, or other wires are installed, wire-identification tags are used for identifying each of the wires. Some of these types of conventional wire-identification tags have a configuration in which its holding section is incorporated in its display section, that is, the wire-holding section itself which holds a wire includes the display surface which displays wire information.
For example, a pair of the members 1 shown in FIG. 23 face each other and pinches a wire. Each member 1 has a wire-information display surface 1a on the outside surface and has a groove 2, a protrusion 3, and a recess 4 on the inner surface. The two members 1 faces each other in a manner that the groove 2 accommodates the wire. The protrusion 3 and the recess 4 of the facing members 1 fit into each other, which results in holding the wire (JP-A-2000-347572).
Also, a wire-identification tag disclosed in JP-A-2000-50448, JP-A-2001-210152, and JP-A-2001-243842 has a configuration in which a holding section is incorporated in a display section.

Further, as shown in FIG. 24, there is a wire-identification tag 7 which is a combination of a strap 5 and a pad 6, a so-called marker tie. In this wire-identification tag 7, the pad 6 including a display surface 6a is incorporated in a strap-securing section 8 including a strap-through hole 8a. By putting the strap 5 through the strap-through hole 8a and tightening it, the wire-identification tag 7 is attached to a wire 9.

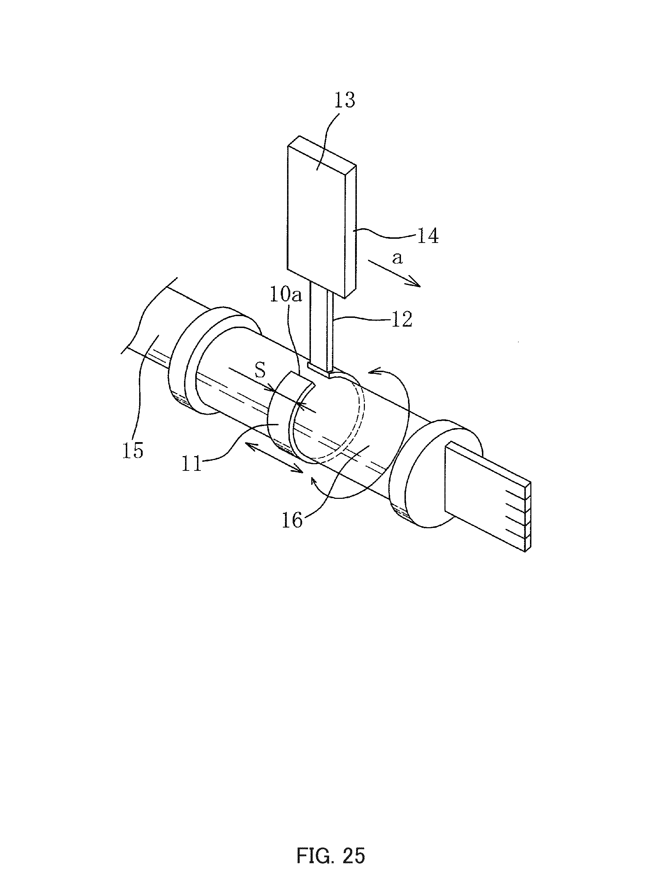

Further, as shown in FIG. 25, there is a wire-identification tag 14 including: an insert opening 10; an outer fitting section 11 which fits into a cylindrical connector 16 attached to a cable 15; a connecting part 12 extending radially from the outer surface of the outer fitting section 11; and a display pad (information input part) 13 which is mounted on the connecting part 12 (JP-A-2002-245865).

### Summary of the Invention

### Technical Problem

The wire-identification tag, as shown in FIG. 23, having a configuration in which a holding section itself includes a display surface, in other words the holding section is incorporated in a display section, causes a problem that the tags interfere with one another when they are attached to wires which are placed in a high-density manner.
That is, the "holding section" to be in close contact with a wire becomes large because the holding section includes the display section. Therefore, when attempting to attach identification tags to each of multiple wires which are placed in a high-density manner, it is not uncommon for the other tags to get in the way preventing the rest of the tags to be attached. Further, the identification tag having a configuration in which a holding section is incorporated in a display section has a problem that the volume is large relative to the area of the display section. That is, the whole body of the display section which also serves as the holding section has a configuration so as to wrap around a wire. Therefore, the thickness of the display section is larger than the diameter of the wire, which results in using more material such as resin, etc.

The marker tie 7 shown in FIG. 24 has a problem that it is difficult to be attached to or removed from a wire. That is, in case of the marker ties 7, it is clumsy to wrap the strap around a wire, to put the strap through the hole of the strap-securing section, and to tighten the strap. Further, this type of the marker tie 7 generally has a configuration with which after once the strap 5 is put through the strap-through hole 8a, the strap 5 cannot be withdrawn. Therefore, after attaching the tie to a wire, it is difficult to remove the tie in ways other than by cutting the strap or other means. In addition, it is difficult to move the tie by sliding along the wire.
Further, because the wire-holding section is not bulky, the marker tie 7 does not have the foregoing problem of the configuration in which a holding section is incorporated in a display section as shown in FIG. 23. However, the pad (display section) 6 is close to a wire 9. Therefore, the marker tie 7 has a problem that the pads 6 interfere with one another when used for wires closely placed. Further, this type of the marker tie 7 is for a wire having a certain degree of thickness and is not suitable to be attached to a thin wire having a diameter of about 2 mm, for example.

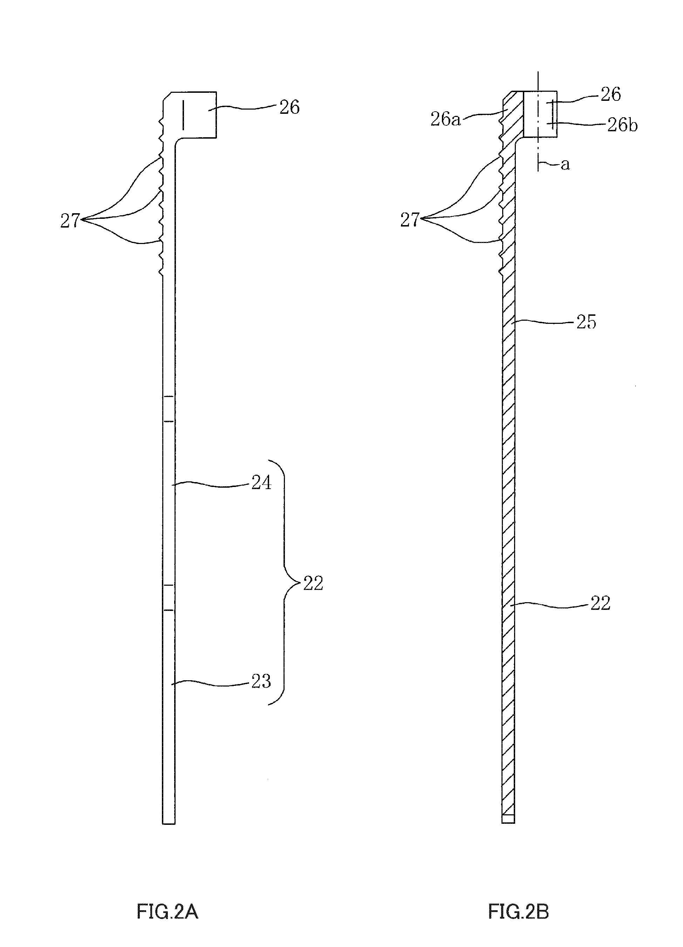

Further, in the wire-identification tag 14 shown in FIG. 2 5, the display section largely extends. Therefore, the tag 14 is not suitable for wires closely placed. It should be noted that, in JP-A-2002-245865, the tag is intended to be used for cables which are connected to a computer, a hub, and the like which are not closely placed. Therefore, it can be considered that the configuration of the tag will not cause a problem.
Further, in this wire-identification tag 14, the width S of the outer fitting section 11 is small. Therefore, when a force in the longitudinal direction of the cable acts on the display pad 13 as indicated by an arrow a (for example, in the case of cable running vertically, the gravitational force of the display pad will act as such), the outer fitting section 11 tilts. The tilted, short outer fitting section 11 produces a force to cause the cylindrical connector 16 to be bent locally. When the foregoing force that causes local bending acts on the connector 16, it will not cause a problem. However, if the force acts on a thin optical cord, it may cause a problem by bending the optical cord locally with a small bending radius, which may result in increasing transmission loss of the optical fiber.

The invention has been made to solve the above conventional problems, and is to provide a cord-identification tag and a method for attaching an identification tag which achieve the following effects: the identification tags will not interfere with one another; the tags are easy to be attached and removed; the whole volume of components is small which results in using less resin material; and the transmission loss of optical fibers is less likely to increase.

### Solution to Problem

An aspect of the invention to solve the above problem is a cord-identification tag that is attached to an optical cord, including: a flat display section that includes a display surface displaying cord-identification information; a neck section which extends from the display section parallel to the display surface and whose width is smaller than that of the display section; and a cord-holding section that is included in the end of the neck section, wherein the cord-identification tag is an integrally-molded resin product and the cord-holding section includes a curved wall having an opening as seen from the longitudinal direction of the neck section.

### Effects of the Invention

In a cord-identification tag according to the invention, a display section is located away from a cord-holding section. Therefore, the cord-holding section can be smaller than a holding section incorporated in a display section.
The cord-identification tag includes the small cord-holding section and a thin, flat display section which is located away from the holding section and connected by the neck section. Therefore, when the cord-identification tags are attached to optical cords placed in a high-density manner, the cord-identification tags can be attached in a manner that the display sections substantially overlay one another partially at a position located away from the optical cords (in a manner that the tags are arranged parallel to one another). This can minimize interference from the tags with one another.

### BRIEF DESCRIPTION OF THE DRAWINGS

FIG. 1 is a front view of a cord-identification tag according to one embodiment of the invention.
FIG. 2A is a right side view of FIG. 1, and FIG. 2B is a cross-sectional view taken along line A-A of FIG. 1.
FIG. 3 is a magnified plan view (view along arrows B-B) of FIG. 1.
FIG. 4A is a magnified bottom view of FIG. 1 (view along arrows C-C), and
FIG. 4B is a magnified cross-sectional view taken along line D-D of FIG. 1.
FIG. 5 is rear view of FIG. 1.
FIG. 6 is a rear perspective view of the cord-identification tag.
FIG. 7 is a diagram illustrating how the cord-identification tag of FIG. 6 is attached to an optical cord.
FIG. 8 is a diagram illustrating how the cord-identification tag is attached to one of multiple optical cords which are closely placed in and connected to a fiber termination module.
FIG. 9 is a diagram showing the state in which, to a plurality of optical cords running in the vertical direction, the cord-identification tags are attached in a manner that the display sections overlay one another partially so as to overlap one another.
FIG. 10 is a diagram illustrating how the display section of the second cord-identification tag from the top can be seen by turning the display section of the uppermost cord-identification tag in FIG. 9.
FIG. 11 is a front view of a cord-identification tag according to one embodiment of the invention.
FIG. 12A is a right side view of FIG. 11, and FIG. 12B is a cross-sectional view taken along line A-A of FIG. 11.
FIG. 13 is a magnified plan view (view along arrows B-B) of FIG. 11.
FIG. 14A is a magnified bottom view of FIG. 11 (view along arrows C-C), and FIG. 14B is a magnified cross-sectional view taken along line D-D of FIG. 11.
FIG. 15 is a rear view of FIG. 11.
FIG. 16 is a rear perspective view of the cord-identification tag.
FIG. 17 is a diagram illustrating how the cord-identification tag of FIG. 16 is attached to an optical cord.
FIG. 18 is a diagram illustrating how the cord-identification tag is attached to one of multiple optical cords which are closely placed in and connected to a fiber termination module.
FIG. 19 is a diagram showing the state in which, to a plurality of optical cords running in the vertical direction, the cord-identification tags are attached in a manner that the display sections overlay one another partially so as to overlap one another.
FIG. 20 is a diagram illustrating how the display section of the second cord-identification tag from the top can be seen by turning the display section of the uppermost cord-identification tag in FIG. 19.
FIG. 21 is a magnified perspective view showing the vicinity of a cord-holding section of the other embodiment of a cord-identification tag according to the invention.
FIG. 22 is a plan view of the cord-identification tag in the embodiment of

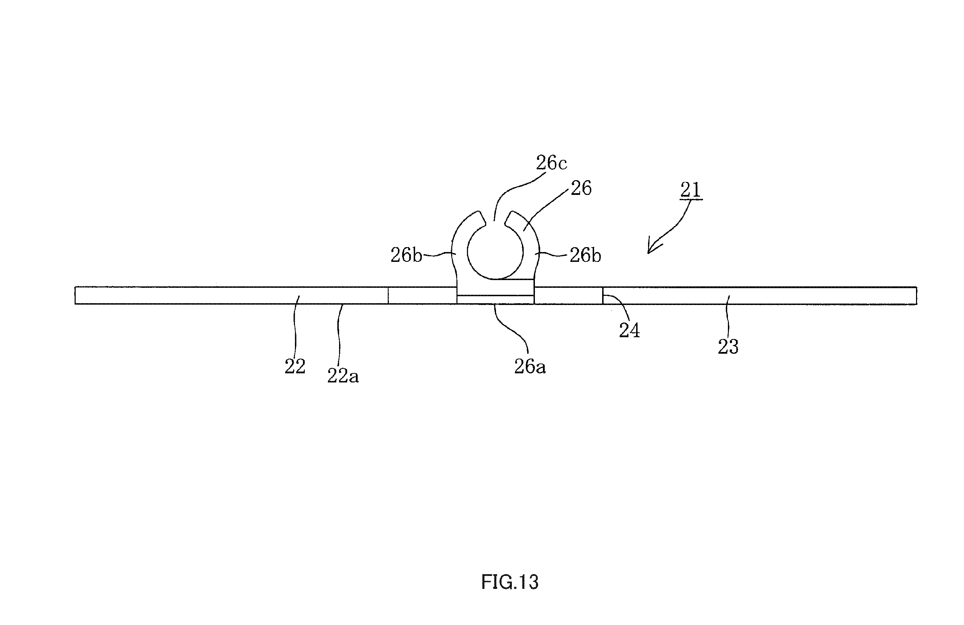

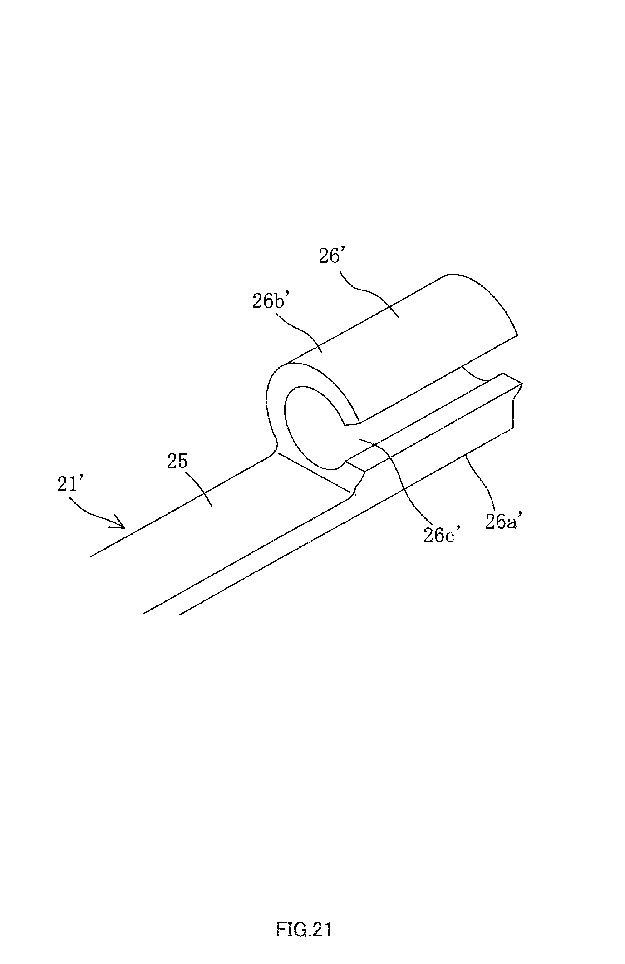

FIG. 21 (corresponding to FIG. 13).
FIG. 23A is a plan view of a conventional wire-identification tag, and FIG. 23B is a cross-sectional view taken along line E-E of FIG. 23A.
FIG. 24 is a perspective view of another conventional wire-identification tag which is attached to a wire.
FIG. 25 is a perspective view of another conventional wire-identification tag, which is attached to a connector attached to a wire.

### Mode for Carrying Out the Invention

At least the following matters will be made clear by the description in the embodiments to be described later.

The cord-identification tag according to the invention is a cord-identification tag which is to be attached to an optical cord and which is an integrally-molded resin product, the cord-identification tag including: a flat display section that includes a display surface displaying cord-identification information, a neck section which extends from the display section parallel to the display surface and whose width is smaller than that of the display section, and a cord-holding section that is included in the end of the neck section.
The cord-holding section includes curved walls which stand respectively on both sides of a bottom section incorporated in the end of the neck section. The cord-holding section has substantially a broken cylindrical shape which has a slit-like opening on top thereof and whose cylinder-axis direction is parallel to the direction in which the neck section extends.

A cord-identification tag is characterized in that an optical cord which the tag targets has a diameter d of 2 mm ± 1 mm.

A cord-identification tag is characterized in that it is for an optical cord whose diameter d is 2 mm ± 1 mm, and that the inside diameter of the cord-holding section is 0.9d x (1 ± 0.05).

A cord-identification tag is characterized in that it is for an optical cord whose diameter d is 2 mm ± 1 mm, and that the inside diameter of the cord-holding section is 1.0d x (1 + 0.05, -0).

A cord-identification tag is characterized in that it is for an optical cord whose diameter d is 2 mm ± 1 mm, and that the length L of the cord-holding section in the longitudinal direction of the cord is 1.5d x (1 ± 0.2).

A cord-identification tag is characterized in that it is for an optical cord whose diameter d is 2 mm ± 1 mm and that the length of the neck section is more than or equal to 5d.

A cord-identification tag is characterized in that it is for an optical cord whose diameter d is 2 mm ± 1 mm and that the thickness of the display section is less than or equal to 0.5d.

A cord-identification tag is characterized in that on the surface of the opposite side of the side on which the cord-holding section of the neck section is formed, either one of a projection and a recess is formed for slip resistance.

A cord-identification tag is characterized in that, the neck section has a flexibility that enables the display section of a lower cord-identification tag to be seen by turning the display section of an upper cord-identification tag when the two cord-identification tags overlay each other.

Further, a method for attaching an identification tag, in which any of the aforementioned cord-identification tags is attached to a plurality of adjacent optical cords running parallel to one another, is characterized in that each of the cord-identification tags is attached to each of the optical cords in a manner that the display sections overlay one another partially so as to overlap one another.

In a cord-identification tag according to the present invention, a display section is located away from a cord-holding section. Therefore, the cord-holding section can be smaller than a holding section incorporated in a display section.
The cord-identification tag includes the small cord-holding section and the thin flat display section which is located away from the holding section and connected by the neck section. Therefore, when the cord-identification tags are attached to optical cords placed in a high-density manner, the cord-identification tags can be attached in a manner that the display sections substantially overlay one another partially at a position located away from the optical cords (in a manner that the tags are arranged parallel to one another). This can minimize interference from the tags with one another.
This effect can be satisfactorily achieved when used for thin optical cords which have a diameter d of about 2 mm and are placed in a high-density manner.

The cord-holding section has a broken cylindrical shape whose inside diameter is about the diameter of an optical cord and has a slit-like opening which enables the optical cord to fit into the cord-holding section from the side of the section. Thereby, the following effects can be achieved.
(1) By placing an optical cord along the slit and pushing it lightly through the slit, the cord-identification tag can be attached to the optical cord. Therefore, it is easy to attach the tag to an optical cord.
(2) If the inside diameter of the broken cylindrical shape of the cord-holding section is designed to be smaller than or equal to the diameter of an optical cord, the inner surface of the cord-holding section holds the optical cord in a spring-like manner. Therefore, the cord-identification tag becomes suitable for use in which the placement of the tag cannot be easily moved. In this case, it is preferable that, in terms of a relationship to the diameter of an optical cord, the inside diameter of the cord-holding section is set to 0.9d x (1 ± 0.05).
   Further, in this case, if the force which acts in a spring-like manner is adjusted by adjusting the inside diameter of the cord-holding section, even after attaching the cord-identification tag to an optical cord, the tag can be moved by sliding in the longitudinal direction of the cord.
(3) If the inside diameter of the broken cylindrical shape of the cord-holding section is designed to be larger than the diameter of an optical cord, the cord-identification tag becomes suitable for use in which the placement of the tag can be easily moved. In this case, it is preferable that, in terms of a relationship to the diameter of an optical cord, the inside diameter of the cord-holding section is set for example to 1.0d x (1 + 0.05, -0).
(4) The length L of the cord-holding section in the longitudinal direction of the optical cord can be short regardless of the size of the display section. This enables the cord-identification tag to be attached to an optical cord which is placed in a curved form.
   In this case, it is preferable that, in terms of a relationship to the diameter of an optical cord, the length L of the cord-holding section is set so that the length L of the cord-holding section in the longitudinal direction of cords is 1.5d x (1 ± 0.2).
   It should be noted that with a cord-identification tag according to the present embodiment, shortening the length of the holding section will not cause local bending with a small bending radius, therefore will not cause the accompanying problem of increasing transmission loss of the optical fibers (to be described in detail later).
(5) By enlarging the slit of the cord-holding section of the cord-identification tag which is attached to an optical cord, the cord-identification tag can be easily removed from the optical cord.
(6) Because the cord-identification tag can be easily attached to and removed from an optical cord, a used cord-identification tag can be reused as a cord-identification tag for another optical cord when rewiring optical cords, by rewriting the information on the display surface or by replacing the adhesive label on which the cord-identification information is printed with a new one.
(7) The neck section, the display section and the like may be thin regardless of the diameter of an optical cord. Therefore, the volume of the entire cord-identification tag can be made relatively small using less resin material, making it resource-saving and also economically cost-effective.
(8) The cord-identification tag according to the present embodiment has a simple, flat shape on the whole with only the small broken cylindrical shape on substantially an end of a flat plate (display section and neck section), the cylindrical shape having a cylinder-axis direction along the longitudinal direction of the flat plate. Therefore, a mold with which the tag is made as an integrally-molded resin product can be simple and the tag can be easily manufactured.

Forming projections or recesses for slip resistance on the opposite side of the cord-holding section of the neck section makes the cord-identification tag easier to be attached and removed by hand.

A method for attaching an identification tag, in which cord-identification tags are each attached to optical cords in a manner that the display sections overlay one another partially so as to overlap one another can prevent the tags from interfering with one another even when the tags are closely placed.

A cord-identification tag according to the invention is a cord-identification tag which is to be attached to an optical cord and which is an integrally-molded resin product, the cord-identification tag including: a flat display section that includes a display surface displaying cord-identification information, a neck section which extends from the display section parallel to the display surface and whose width is smaller than that of the display section, and a cord-holding section that is included in the end of the neck section.
The cord-holding section includes curved walls that stand respectively on both sides of a bottom section incorporated in the end of the neck section; the curved walls on both sides have substantially a broken circular shape which has an opening on top thereof as seen from the longitudinal direction of the neck section, and the walls are arranged alternately in the longitudinal direction of the neck section in a staggered pattern as seen from the direction perpendicular to the display surface. The neck section has a flexibility that enables the display section of a lower cord-identification tag to be seen by turning the display section of an upper cord-identification tag when the two cord-identification tags overlay each other.

A cord-identification tag is characterized in that the curved walls on both sides are arranged in a staggered pattern, one on one side and two on the other side.

A cord-identification tag is characterized in that an optical cord which the tag targets has a diameter d of 2 mm ± 1 mm.

A cord-identification tag is characterized in that it is for an optical cord whose diameter d is 2 mm ± 1 mm, and that the inside diameter of the cord-holding section is 0.9d x (1 ± 0.05) as seen from the longitudinal direction of the neck section.

A cord-identification tag is characterized in that it is for an optical cord whose diameter d is 2 mm ± 1 mm, and that the inside diameter of the cord-holding section is 1.0d x (1 + 0.05, -0) as seen from the longitudinal direction of the neck section.

A cord-identification tag is characterized in that it is for an optical cord whose diameter d is 2 mm ± 1 mm, and that the length L of the cord-holding section in the longitudinal direction of the cord is 1.5d x (1 ± 0.2).

A cord-identification tag is characterized in that it is for an optical cord whose diameter d is 2 mm ± 1 mm, and that the length of the neck section is more than or equal to 5d.

A cord-identification tag is characterized in that it is for an optical cord whose diameter d is 2 mm ± 1 mm, and that the thickness of the display section is less than or equal to 0.5d.

Further, a method for attaching an identification tag, in which any of the aforementioned cord-identification tags is attached to a plurality of adjacent optical cords running parallel to one another, is characterized in that each of the cord-identification tags is attached to each of the optical cords in a manner that the display sections overlay one another partially so as to overlap one another.

Another cord-identification tag is characterized in that the tag is attached to an optical cord and is an integrally-molded resin product, the cord-identification tag including: a flat display section which includes a display surface displaying cord-identification information, a neck section which extends from the display section parallel to the display surface and whose width is smaller than that of the display section, and a cord-holding section which is included in the end of the neck section,
The cord-holding section includes a curved wall which stands from one side of the bottom section incorporated in the end of the neck section and extends close to the other side. In addition, the cord-holding section has substantially a broken cylindrical shape whose cylinder-axis direction is parallel to the longitudinal direction of the neck section and which has a slit-like opening on a side thereof. The neck section has a flexibility that enables the display section of a lower cord-identification tag to be seen by turning the display section of an upper cord-identification tag when the two cord-identification tags overlay each other.

In a cord-identification tag according to the present invention, a display section is located away from a cord-holding section. Therefore, the cord-holding section can be smaller than a holding section incorporated in a display section.
The cord-identification tag includes the small cord-holding section and the thin flat display section which is located away from the holding section and connected by the neck section. Therefore, when the cord-identification tags are attached to optical cords placed in a high-density manner, the cord-identification tags can be attached in a manner that the display sections substantially overlay one another partially at a position located away from the optical cords (in a manner that the tags are arranged parallel to one another). This can minimize interference from the tags with one another.
This effect can be satisfactorily achieved when used for thin optical cords which have a diameter d of about 2 mm and are placed in a high-density manner.
Further, the neck section has a flexibility that enables the display section of a lower cord-identification tag to be seen by turning the display section of an upper cord-identification tag when the two cord-identification tags overlay each other. Therefore, in the case where the display sections of the cord-identification tags substantially overlay one another, the display section of the lower cord-identification tag can be seen by turning the display section of the upper tag. Further, when both surfaces of the display section are used as a display surface, the backside display surface can be seen easily.

The cord-holding section includes the curved walls which stand respectively on both sides of the bottom section and which are arranged alternately in the longitudinal direction of the neck section in a staggered pattern, the curved walls having substantially a broken circular shape which has an opening on top thereof as seen from the longitudinal direction of the neck section. Thereby, the following effects can be achieved.
(1) When an optical cord is placed between the top sections of the curved walls on both sides and is pushed lightly, the optical cord is pushed inside the curved walls which have substantially a broken circular shape as seen from the longitudinal direction of the neck section. The cord is held by the curved walls on both sides arranged in a staggered pattern, in such a manner that the cord will not come off on its own. By just pushing an optical cord, the optical cord can be attached to the cord-holding section. Therefore, it is easy to attach the tag to an optical cord.
   In this case, the curved walls on both sides are placed in a staggered pattern not facing each other. Therefore, even if the space between the top sections of the curved walls on both sides is slightly narrow as seen from the longitudinal direction of the neck section, an optical cord can be easily pressed inside the curved walls. That is, the cord-holding section has the configuration that, while securely holding the optical cord, enables the user to easily attach the tag to the optical cord.
   Further, because the curved walls on both sides are arranged in a staggered pattern, the walls will not clamp the jacket of the optical cord "from both sides." This can minimize deformation (dent) of the jacket of the optical cord. This is effective when the inside diameter of the cord-holding section is small in relation to the diameter d of an optical cord (when the inside diameter of the cord-holding section is 0.9d x (1 ± 0.05) as seen from the longitudinal direction of the neck section).
   The curved walls on both sides are arranged in a staggered pattern, one on one side and two on the other side. This configuration is suitable for achieving the abovementioned secure holding and easy attachment structure and also for minimizing the deformation (dent) of the jacket the optical cord.
(2) If the inside diameter of the cord-holding section as seen from the longitudinal direction of the neck section (the inside diameter of the broken circular shape, which is the curved walls in a staggered pattern as seen from the longitudinal direction of the neck section) is designed to be smaller than or equal to the diameter of an optical cord, the inner surface of the cord-holding section holds the optical cord in a spring-like manner. Therefore, the cord-identification tag becomes suitable for use in which the placement of the tag cannot be easily moved. In this case, it is preferable that, in terms of a relationship to the diameter of an optical cord, the inside diameter of the cord-holding section is set to 0.9d x (1 ± 0.05) as seen from the longitudinal direction of the neck section.
   Further, in this case, if the force which acts in a spring-like manner is adjusted by adjusting the inside diameter of the cord-holding section, even after attaching the cord-identification tag to an optical cord, the tag can be moved by sliding in the longitudinal direction of the cord.
(3) If the inside diameter of the broken cylindrical shape of the cord-holding section as seen from the longitudinal direction of the neck section is designed to be larger than the diameter of an optical cord, the cord-identification tag becomes suitable for use in which the placement of the tag can be easily moved. In this case, it is preferable that, in terms of a relationship to the diameter of an optical cord, the inside diameter of the cord-holding section is set for example to 1.0d x (1 + 0.05, -0) as seen from the longitudinal direction of the neck section.
(4) The length L of the cord-holding section in the longitudinal direction of the optical cord can be short regardless of the size of the display section. This enables the cord-identification tag to be attached to an optical cord which is placed in a curved form.
   In this case, it is preferable that, in terms of a relationship to the diameter of an optical cord, the length L of the cord-holding section is set so that the length L of the cord-holding section in the longitudinal direction of cords is 1.5d x (1 ± 0.2).
   It should be noted that with a cord-identification tag according to the present embodiment, shortening the length of the holding section will not cause local bending with a small bending radius, therefore will not cause the accompanying problem of increasing transmission loss of the optical fibers (to be described in detail later).
(5) By enlarging the space between the curved walls on both sides of the cord-holding section of the cord-identification tag which is attached to an optical cord, the cord-identification tag can be easily removed from the optical cord
(6) Because the cord-identification tag can be easily attached to and removed from an optical cord, a used cord-identification tag can be reused as a cord-identification tag for another optical cord when rewiring optical cords, by rewriting the information on the display surface or by replacing the adhesive label on which the cord-identification information is printed with a new one.
(7) The neck section, the display section and the like may be thin regardless of the diameter of an optical cord. Therefore, the volume of the entire cord-identification tag can be made relatively small using less resin material, making it resource-saving and also economically cost-effective.
(8) The cord-identification tag according to the invention has a simple, flat shape on the whole with only the small curved walls in a staggered pattern on substantially an end of a flat plate (display section and neck section). Therefore, a mold with which the tag is made as an integrally-molded resin product can be simple and the tag can be easily manufactured.

A method for attaching an identification tag, in which cord-identification tags are each attached to optical cords in a manner that the display sections overlay one another partially so as to overlap one another, can prevent the tags from interfering with one another even when the tags are closely placed.

Also, another cord-identification tag can achieve the following effects: to make the cord-holding section small, to minimize interference from the tags with one another, and the like.
Further, the cord-holding section includes a curved wall which stands from one side of the bottom section and extends close to the other side. In addition, the cord-holding section has substantially a broken cylindrical shape whose cylinder-axis direction is parallel to the longitudinal direction of the neck section and has a slit-like opening on a side thereof. Thereby, substantially the same effects as those of the cord-identification tag mentioned in (2)-(8) can be achieved. Further, depending on the wiring arrangement of optical cords, an optical cord can be more easily attached from the side of the identification tag than from the top as seen from the longitudinal direction of the neck section of the tag. Therefore, in this case, the cord-identification tag which has a slit-like opening on a side thereof is effective. Further, when placed on the bottom section and viewing the curved wall from the longitudinal direction of the neck section, the slit-like opening of the curved wall is located on the side (the right side or the left side) of the wall. This makes possible the effect that an optical cord will not easily drop off from the slit-like opening of a tag even when the display section of the tag is turned too much.

A cord-identification tag and a method for attaching an identification tag according to the invention will be described below with reference to the drawings.

### Embodiment 1

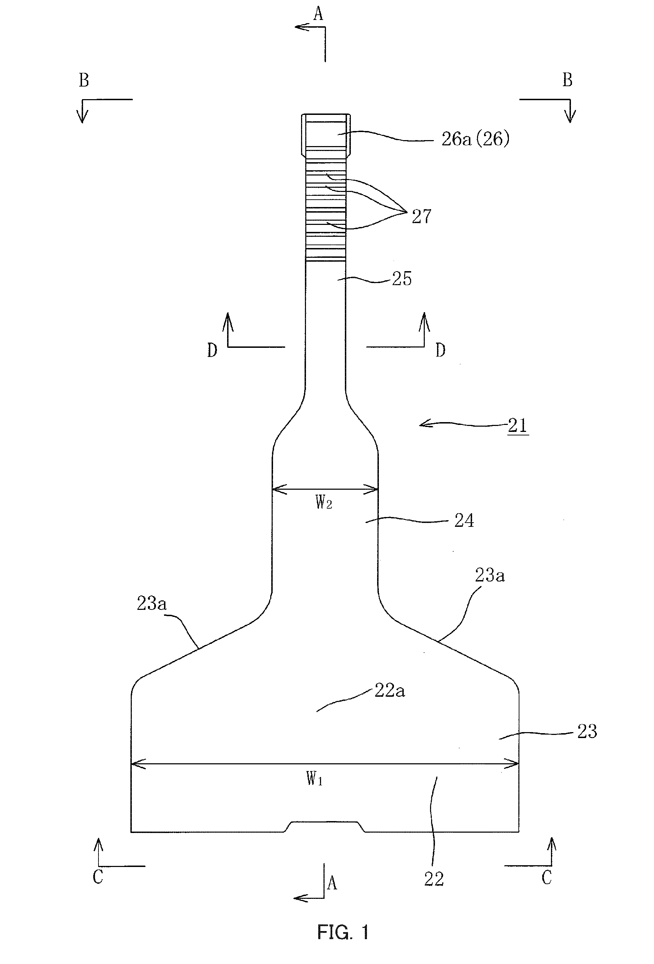

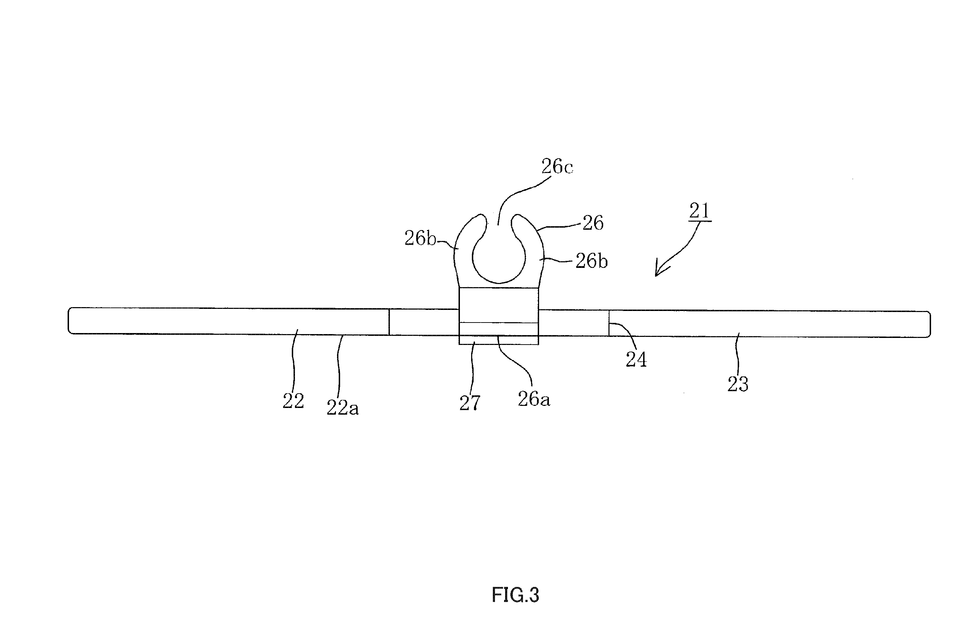

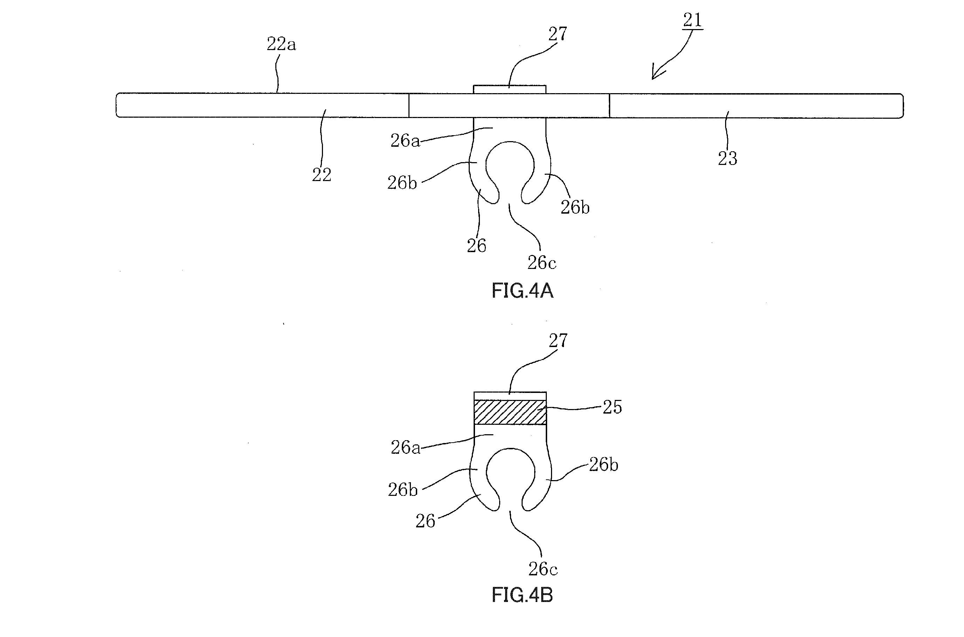

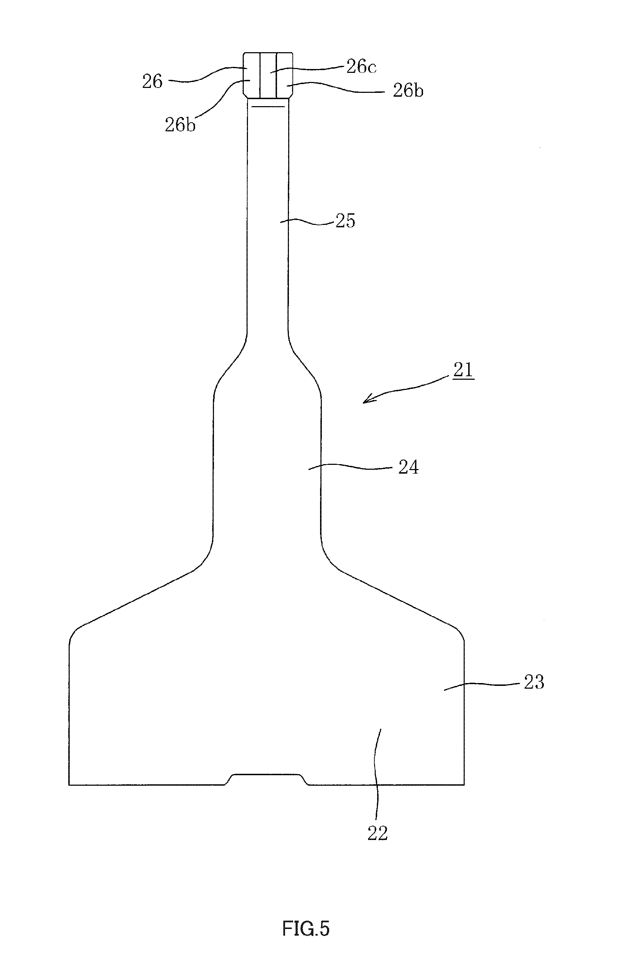

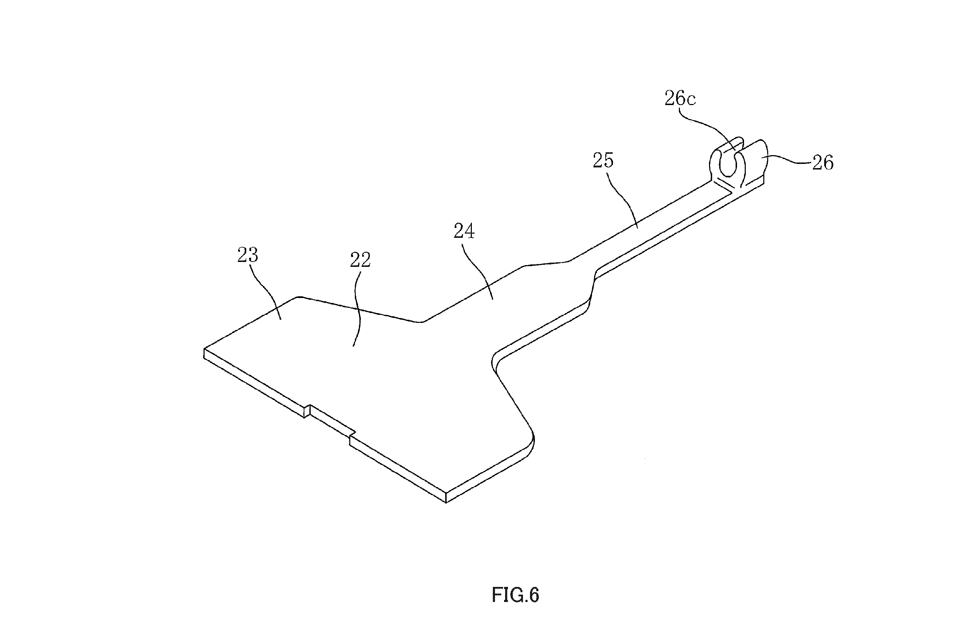

FIG. 1 is a front view of a cord-identification tag 21 according to one embodiment of the invention. FIG. 2A is a right side view of FIG. 1, and FIG. 2B is a cross-sectional view taken along line A-A of FIG. 1. FIG. 3 is a magnified plan view of FIG. 1 (view along arrows B-B). FIG. 4A is a magnified bottom view of FIG. 1 (view along arrows C-C), and FIG. 4B is a magnified cross-sectional view taken along line D-D of FIG. 1. FIG. 5 is a rear view of FIG. 1. FIG. 6 is a rear perspective view of the cord-identification tag.
The cord-identification tag 21 is attached to a single-fiber optical cord. And, the cord-identification tag 21, as shown in these figures, is an integrally-molded resin product including: a flat display section 22 that includes a display surface 22a displaying cord-identification information; the neck section 25 that extends from the display section 22 parallel to the display surface 22a and whose width is smaller than that of the display section 22; and a cord-holding section 26 which is included in the end of the neck section 2 5.
POM (polyacetal), PC (polycarbonate), nylon 66, etc may be employed as a resin material for example, but the invention is not limited thereto.

The cord-holding section 26 includes curved walls 26b that stand respectively on both sides of a bottom section 26a incorporated in the end of the neck section 25, and has substantially a broken cylindrical shape. The cord-holding section has a slit-like opening 26c on top thereof (opposite the bottom section 26a) and the cylinder-axis direction of the cylindrical shape (up-and-down direction in FIGS. 1, 2 and the like) is parallel to the direction in which the neck section extends (up-and-down direction in FIGS. 1, 2 and the like). In FIG. 2B, the cylinder axis of the cord-holding section 26 is indicated by symbol a.

The display section 22 of the cord-identification tag 21 in the embodiment is substantially rectangular and includes a main section 23 whose width W1 is especially large and the subordinate section 24 whose width W2 is smaller than that of the main section 23. A section 23a of the main section 23 which is connected to the subordinate section 24 has an oblique angle.
The neck section 25 is connected to the end of the subordinate section 24 of the display section 22 which narrows in a curved manner.
Further, on the surface of the opposite side of the cord-holding section 26 of the neck section 25 (the surface on the side of the display surface 22a), a plurality of elongated protrusions 27 are formed in the width direction, and functions as slip resistance. These elongated protrusions 27 have a triangle cross section.
The inside diameter of the cord-holding section 26 is substantially the same as or slightly smaller or larger than the diameter of the optical cord held by the cord-holding section.

The cord-identification tag 21 of the embodiment is intended to be used for a single-fiber optical cord having a diameter of 2 mm with a silica glass core. The size of the tag is as follows: the thickness of the flat display section 22 and the neck section 25 is approximately 0.8 mm, the width W1 of the main section 23 of the display section 22 is approximately 27 mm, the width of the subordinate section 24 is approximately 7 mm, and the width of the neck section 25 is approximately 2.5 mm. The elongated protrusion 27 of the neck section 25 has a triangle cross section whose vertex angle is about 60°, and the height of the protrusion 2 7 is about 0.3 mm.
The length of the cord-holding section 26 is about 3 mm, the diameter is about 2.8 mm, and the inside diameter is about 1.8 mm. The width of the slit-like opening 26c is about 0.6 mm.
It should be noted that a cord-identification tag according to the present embodiment is preferably applied to, in particular, a single-fiber optical cord having a diameter of substantially 2 mm ± 1.0 mm.

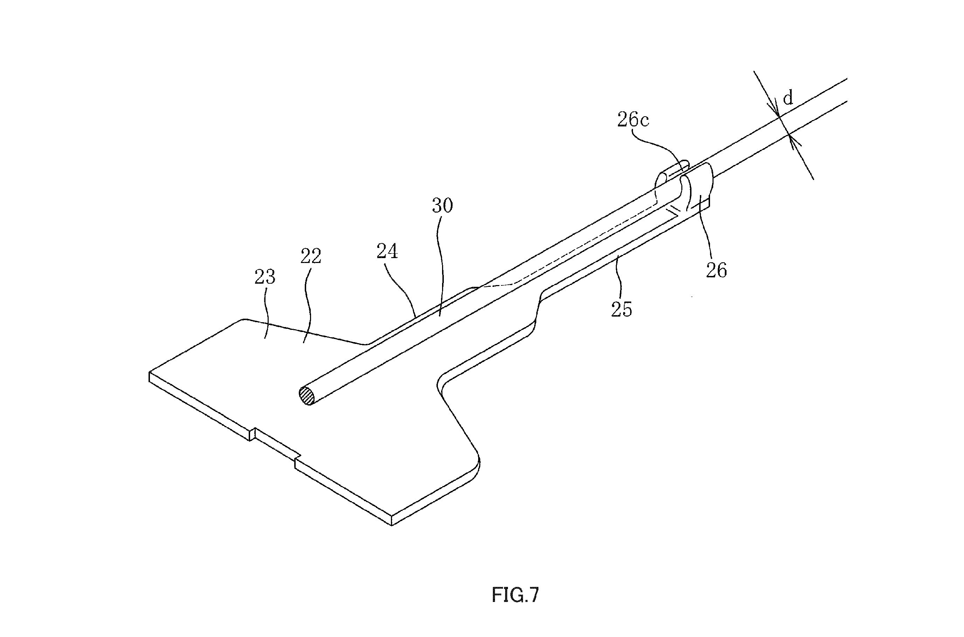

When attaching the aforementioned cord-identification tag 21 to an optical cord, the slit-like opening 26c of the cord-holding section 26 is placed along the optical cord. And, the optical cord is pushed into the cord-holding section 26, or the cord-identification tag 21 is pushed towards the optical cord. The optical cord is pushed through the slit-like opening 26c, and fits into and is held by the cylindrical inner surface of the cord-holding section 26.
In this case, the cord-identification tag 21 is attached to an optical cord 30 along the cord 30 as shown in FIG. 7.
In the aforementioned attaching and removing of the cord-identification tag 21 by hand to/from an optical cord, a plurality of the elongated protrusions 27 which are formed on the opposite side of the cord-holding section 26 of the neck section 25 functions as slip resistance. This makes attaching and removing of the tag easier.

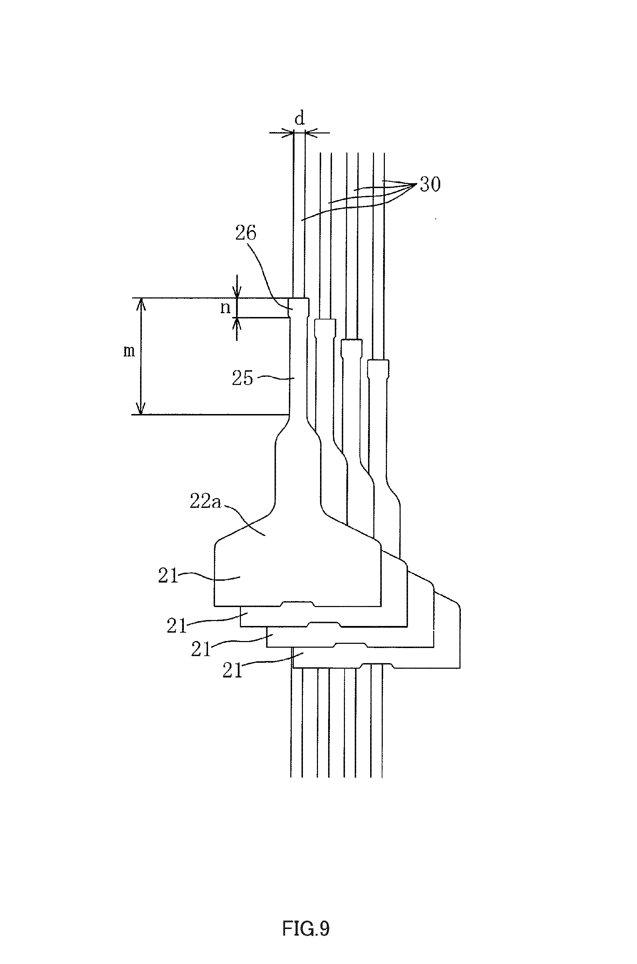

The cord-holding section 26 of the aforementioned cord-identification tag 21 is placed on the end of the narrow neck section 25 extending from the display section 26, and is located away from the display section 26. Therefore, the cord-holding section can be smaller than the conventional holding section incorporated in a display section shown in FIG. 2 3.

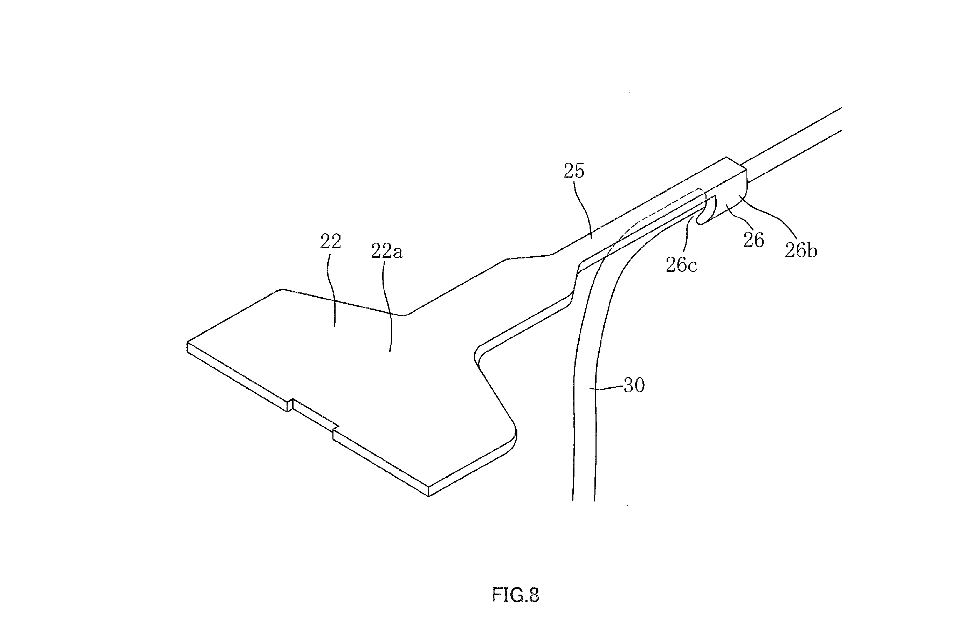

FIG. 8 is a diagram showing one of the conditions in which the cord-identification tag 21 is attached to one of multiple optical cords which are closely placed in and connected to a fiber termination module. As mentioned above, the cord-holding section 26 is small. And, the display section 22 is thin and flat in shape, has a thickness of about 0.8 mm, and is located away from the holding section 26 and connected by the neck section 25. Therefore, when the cord-identification tags are attached to optical cords placed in a high-density manner, the cord-identification tags can be attached in a manner that the display sections substantially overlay one another partially at a position located away from the optical cords (in a manner that the tags are arranged parallel to one another). This can minimize interference from the tags with one another.
Further, for example, when a plurality of optical cords are running parallel to one another, a plurality of the cord-identification tags 21 are attached to the optical cords as shown in FIG. 9 so as to overlap one another in a manner that the display sections overlay one another partially. This makes it possible to prevent the tags from interfering with one another even when the tags are closely placed. In the illustrated example in which the tags are attached to four optical cords, if the length m of the neck section 25 is slightly longer than three times the length n of the cord-holding section 26, the tags can be prevented from interfering with one another. If the length n of the cord-holding section 26 is 1.5d (d = optical cord diameter) and the length m of the neck section 25 is longer than 5d ( = 1.5d x 3 plus), the tags can be prevented from interfering with one another. Generally, when number N of the optical cords are running adjacent and parallel to one another, if the length of the neck section 25 is slightly longer than (N-1) x n, the tags can be prevented from interfering with one another even when the tags are closely placed.
It should be noted that, while the optical cords are running vertically in the illustrated example, the tags can be attached in the aforementioned manner to optical cords which are running horizontally or obliquely, as long as the cords are parallel to one another.
This effect can be satisfactorily achieved when used for thin optical cords which have a diameter d of about 2 mm and are placed in a high-density manner as mentioned in this embodiment.

Further, the cord-holding section 26 is a broken cylindrical shape whose inside diameter is about the diameter of an optical cord and has the slit-like opening 26c which enables the optical cord to fit into the cord-holding section from the side of the section. Thereby, the following effects can be achieved.
(1) By placing an optical cord along the slit-like opening 26c and pushing lightly through the slit-like opening 26c, the cord-identification tag can be attached to the optical cord. Therefore, it is easy to attach the tag to an optical cord.
(2) In this embodiment, in relation to the diameter d of an optical cord (= 2.0 mm), the inside diameter of the cord-holding section 26 is about 1.8 mm. If, in this way, the inside diameter of the broken cylindrical shape of the cord-holding section 26 is designed to be smaller than or equal to the diameter of the optical cord, the inner surface of the cord-holding section holds the optical cord in a spring-like manner. Therefore, the cord-identification tag becomes suitable for use in which the placement of the tag cannot be easily moved.
   Further, in this case, if the force which acts in a spring-like manner is adjusted by adjusting the inside diameter of the cord-holding section, even after attaching the cord-identification tag to an optical cord, the tag can be moved by sliding in the longitudinal direction of the cord.
   For this use, in relation to the diameter d of an optical cord, the inside diameter of the cord-holding section is preferably set to 0.9d x (1 ± 0.05), for example.
(3) Further, if the inside diameter of the broken cylindrical shape of the cord-holding section is designed to be larger than the diameter of an optical cord, the cord-identification tag becomes suitable for use in which the placement of the tag can be easily moved.
   In this case, in terms of a relationship to the diameter of an optical cord, the inside diameter of the cord-holding section is preferably set to 1.0d x (1 + 0.05, -0), that is, 2.0-2.1 mm.
(4) The length L of the cord-holding section 26 in the longitudinal direction of the optical cord can be short regardless of the size of the display section 22. This enables the cord-identification tag 21 to be attached to an optical cord which is placed in a curved form.
   An optical cord according to the present embodiment is intended to be used with a minimum bending radius (allowable bending radius) of 15-30 mm. If the length L of the cord-holding section 26 is short, for example 3 mm in the embodiment, a cord-identification tag can be attached to an optical cord at the aforementioned position where the optical cord is bent with an almost minimum bending radius.
   It should be noted that if the length L of the cord-holding section 26 is short, it can be considered that the following will occur. If the display section extends in the radial direction of a cable in similar to the conventional tag shown in FIG. 25, when a force in the longitudinal direction of the cable acts on the display section (for example, in the case of the cable running vertically, the gravitational force of the display section will act as such), the cord-holding section 26 tilts. The tilted, short cord-holding section 26 produces a force to cause an optical cord to be bent locally with a small bending radius. However, in the present embodiment, the optical cord held by the cord-holding section 26 extends from the holding section 26 along the neck section 25. Therefore, the neck section 25 prevents the occurrence of the local bending. That is, in similar to FIG. 9 mentioned above, when optical cords running in the vertical direction, the gravitational force of the cord-identification tag acts on the optical cord along substantially the axial direction, but not acts along the direction in which the optical cord is bent. Therefore, shortening the length of the holding section 26 will not cause the problems of local bending and associated increasing of the transmission loss of the optical fibers.
   It should be noted that, in terms of a relationship to the diameter d of an optical cord, the length L of the cord-holding section is preferably set to about 1.5d x (1 ± 0.2).
(5) By enlarging the slit of the cord-holding section 26 of the cord-identification tag 21 which is attached to an optical cord, the cord-identification tag 21 can be easily removed from the optical cord.
(6) Because the cord-identification tag 21 can be easily attached to and removed from an optical cord, a used cord-identification tag 21 can be reused as a cord-identification tag for another optical cord when rewiring optical cords, by rewriting the information on the display surface or by replacing the adhesive label on which the cord-identification information is printed with a new one.
(7) The neck section 25, the display section 22 and the like may be thin regardless of the diameter of an optical cord. Therefore, the volume of the entire cord-identification tag can be made relatively small using less resin material, making it resource-saving and also economically cost-effective.
(8) The cord-identification tag according to the present embodiment has a simple, flat shape on the whole with only the small broken cylindrical shape (cord-holding section 26) on substantially an end of a flat plate (display section 22 and neck section 25), the cylindrical shape having a cylinder-axis direction along the longitudinal direction of the flat plate. Therefore, a mold with which the tag is made as an integrally-molded resin product can be simple and the tag can be easily manufactured.

Attaching and removing of the cord-identification tag 21 to/from an optical cord is generally performed by pinching the neck section 25 with fingers. Therefore, as mentioned in this embodiment, on the surface of the opposite side of the cord-holding section 26 of the neck section 25, the elongated protrusions (projection and recess) 27 are formed for slip resistance; this makes the tag easier to be attached and removed by hand.

It should be noted that, in this embodiment, the display surface 22a is the surface on the opposite side of the holding section 26 of the display section 22. However, the surface on the same side as the holding section 26 may be the display surface 22a, and also the both surfaces may be the display surface. For example, when using an adhesive label which is placed on both sides of the display section 22 by folding the label along the end of the wide main section 23, both surfaces can be easily made a display surface.

### Embodiment 2

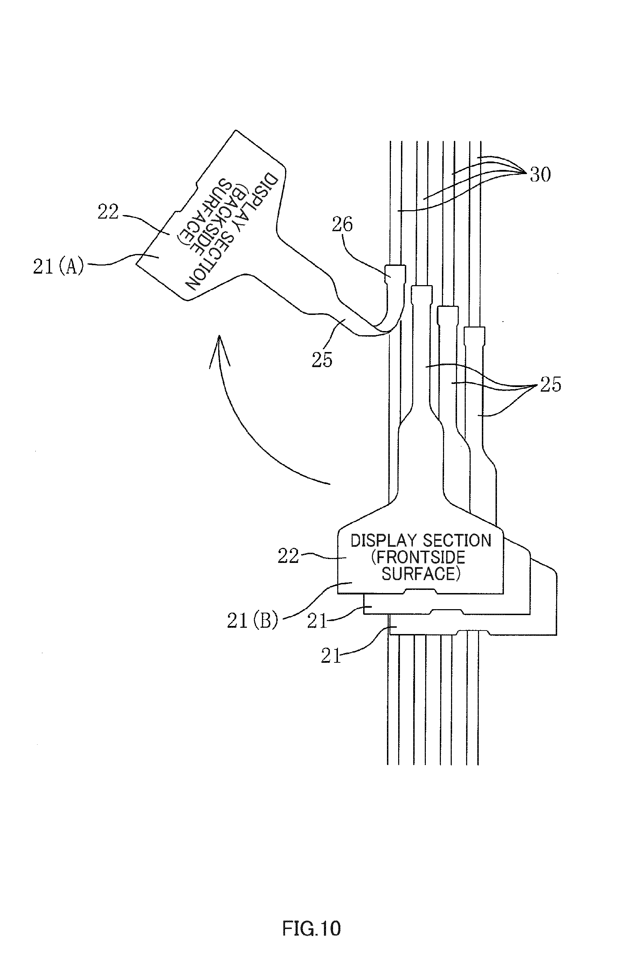

FIG. 10 is a diagram illustrating how the neck section 25 of the cord-identification tag 21 is sufficiently flexible. In the illustrated example, in similar to FIG. 9, the cord-identification tags 21 are attached to the four optical cords 30 running in the vertical direction in a manner that the display sections overlay one another partially so as to overlap one another.
The neck section 25 of the cord-identification tag 21 has a flexibility that enables the display section 22 of a lower cord-identification tag 21(B) to be seen by turning the display section 22 of an upper cord-identification tag 21(A) when the two cord-identification tags 21 overlay each other.
To make a cord-identification tag sufficiently flexible to have the aforementioned characteristics, it is desirable to use a soft material as a resin material for molding the tag, to make the entire body of the tag thin, or to make only the neck section 25 thin or narrow.
Thereby, in the case where the display sections of the cord-identification tags substantially overlay one another, the display section of the lower cord-identification tag can be seen by turning the display section 22 of the upper tag.
Further, when both surfaces of the display section 22 are used as a display surface, the backside display surface can be seen easily.

### Embodiment 3

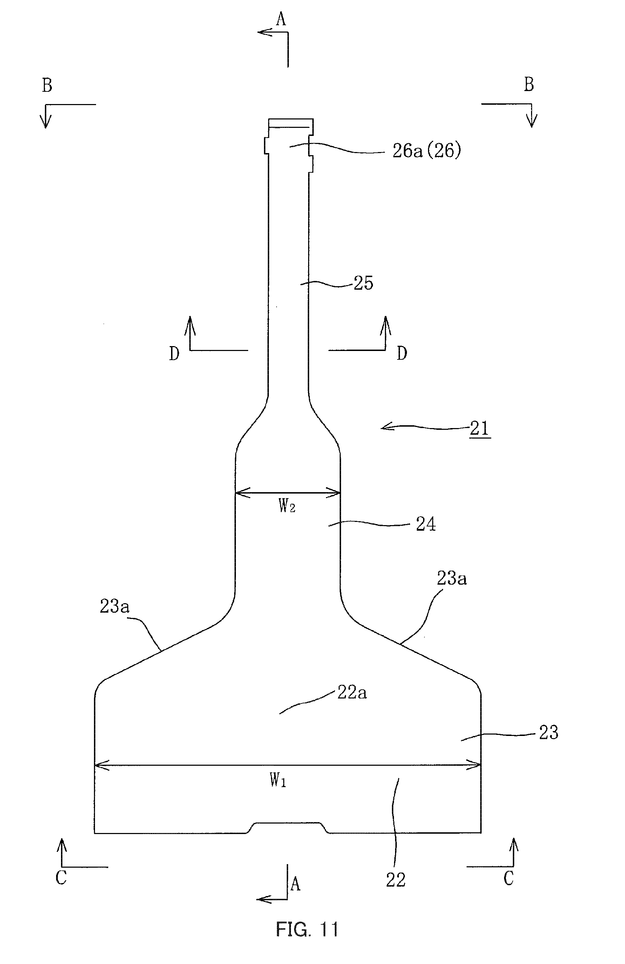

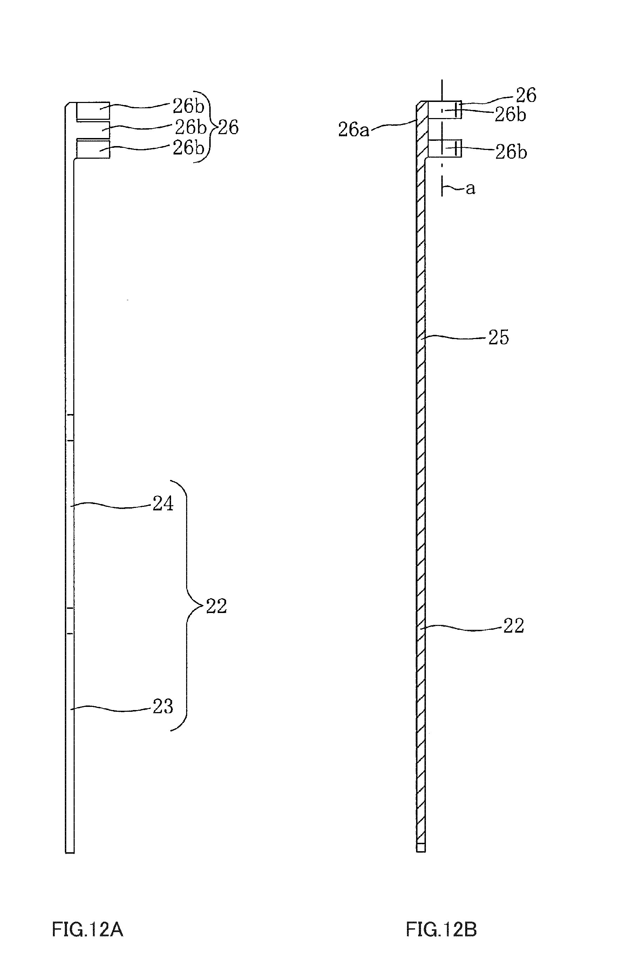

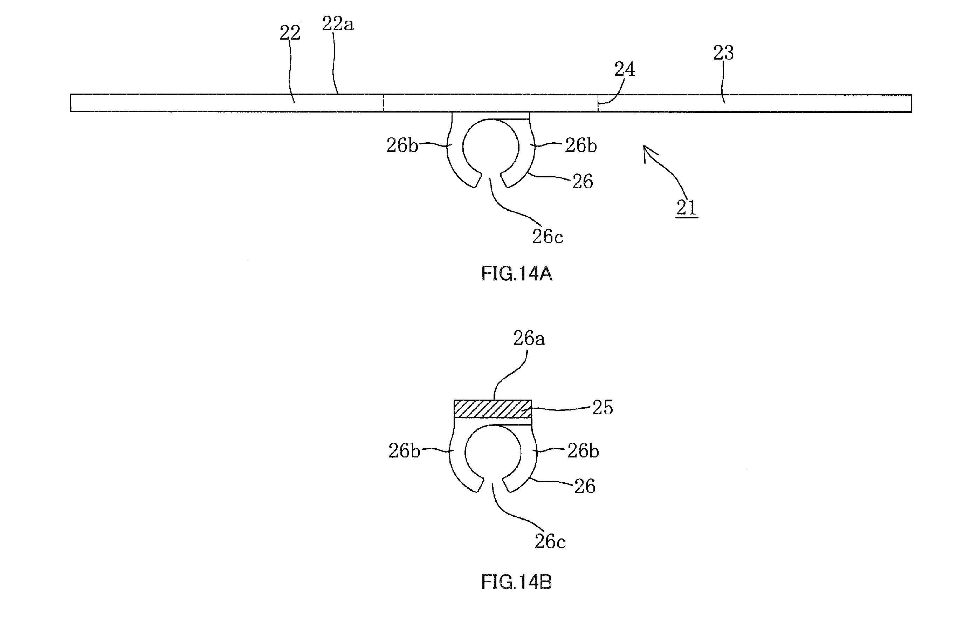

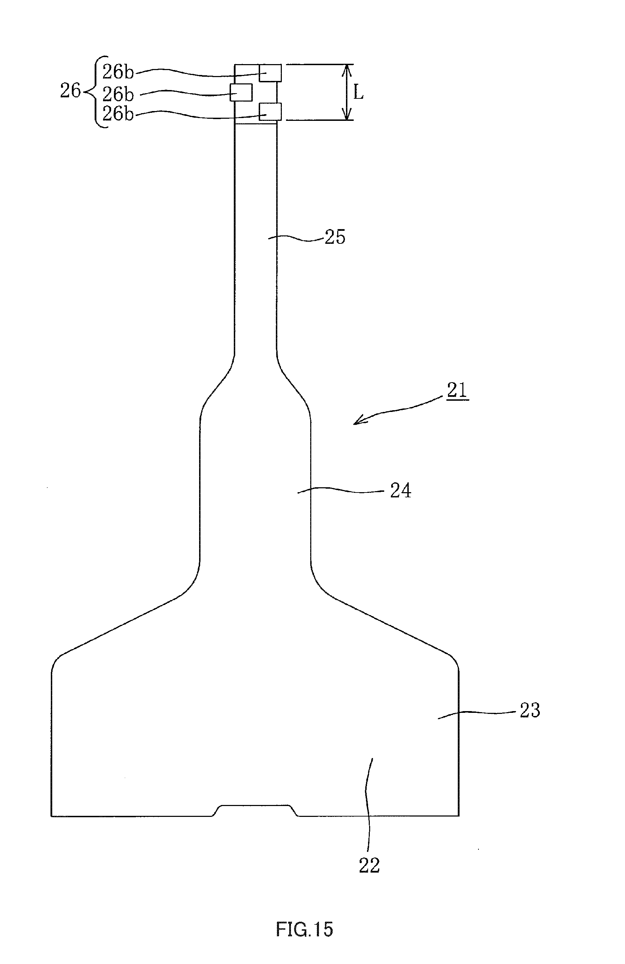

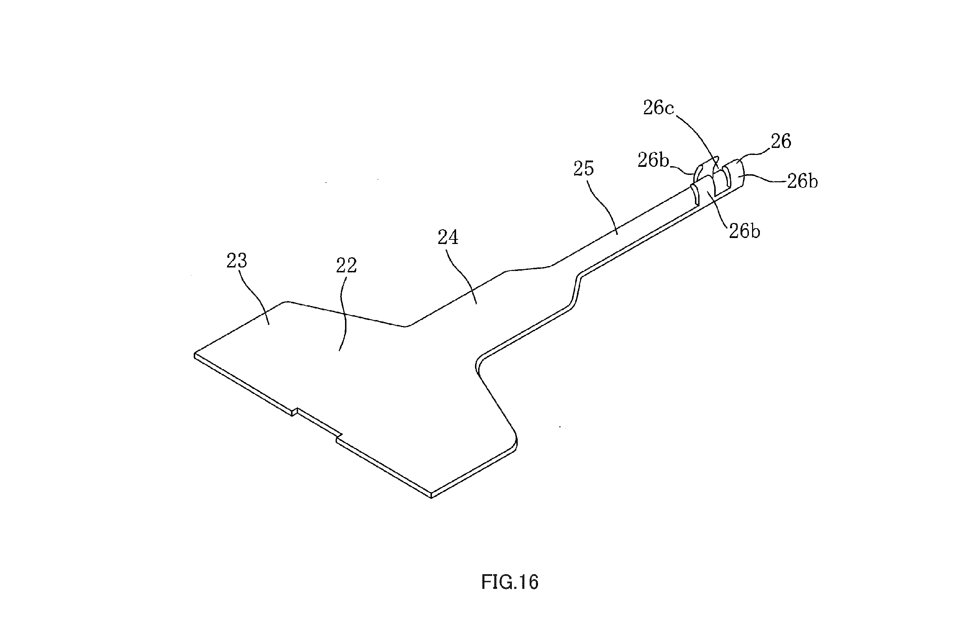

FIG. 11 is a front view of a cord-identification tag 21 according to one embodiment of the invention, FIG. 12A is a right side view of FIG. 11. FIG. 12B is a cross-sectional view taken along line A-A of FIG. 11. FIG. 13 is a magnified plan view of FIG. 11 (view along arrows B-B). FIG. 14A is a magnified bottom view of FIG. 11 (view along arrows C-C), and FIG. 14B is a magnified cross-sectional view taken along line D-D of FIG. 11. FIG. 15 is a rear view of FIG. 11. FIG. 16 is a rear perspective view of the cord-identification tag.
The cord-identification tag 21 is attached to a single-fiber optical cord. And, the cord-identification tag 21, as shown in these figures, is an integrally-molded resin product including: a flat display section 22 that includes a display surface 22a displaying cord-identification information; a neck section 25 that extends from the display section 22 parallel to the display surface 22a and whose width is smaller than that of the display section 22; and a cord-holding section 26 which is included in the end of the neck section 2 5.
POM (polyacetal), PC (polycarbonate), nylon 66, etc may be employed as a resin material for example, but the invention is not limited thereto.

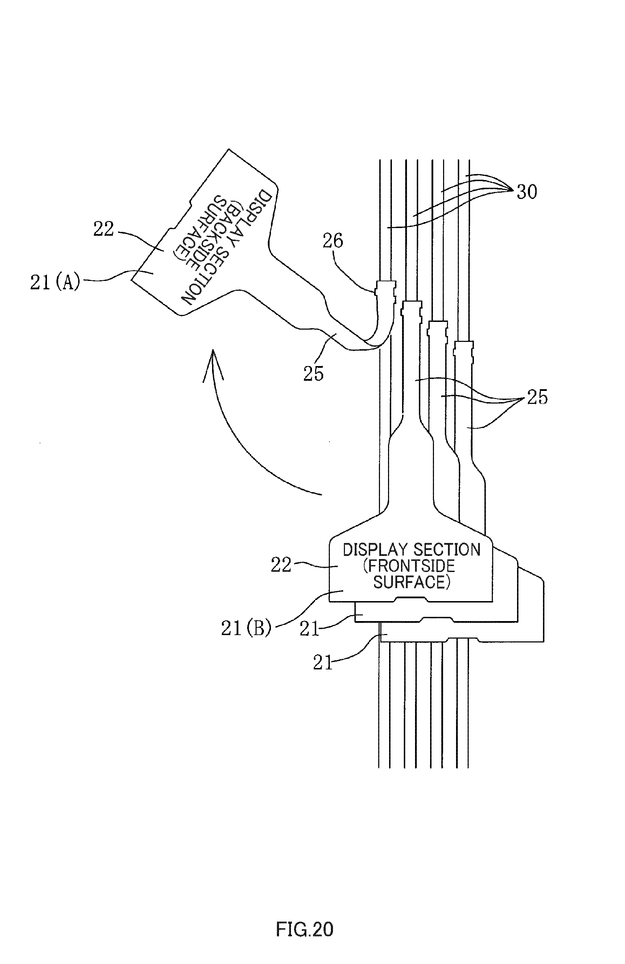

The cord-holding section 26 includes curved walls 26b that stand respectively on both sides of a bottom section 26a incorporated in the end of the neck section 25. As shown in FIG. 13 and the like, the curved walls 26b on both sides have substantially a broken circular shape which has an opening 26c on top thereof as seen from the longitudinal direction of the neck section, and are arranged alternately in the longitudinal direction of the neck section in a staggered pattern as seen from the direction perpendicular to the display surface 22a (that is, in FIG. 15). In this embodiment, as shown in FIGS. 15 and 16 and the like, the curved walls 26b on both sides are arranged in a staggered pattern, one on one side and two on the other side.
The neck section 25 is sufficiently flexible, to be described later in detail with reference to FIG. 20.

The display section 22 of the cord-identification tag 21 in the embodiment is substantially rectangular and includes a main section 23 whose width W1 is especially large and a subordinate section 24 whose width W2 is smaller than that of the main section 23. The section 23a of the main section 23 which is connected to the subordinate section 24 has an oblique angle.
The neck section 25 is connected to the end of the subordinate section 24 of the display section 22 which narrows in a curved manner.
The inside diameter of the cord-holding section 26 as seen from the longitudinal direction of the neck section (the inside diameter of the broken circular shape, which is the curved walls 26b in a staggered pattern as seen from the longitudinal direction of the neck section) is substantially the same as or slightly smaller or larger than the diameter of the optical cord held by the cord-holding section.

The cord-identification tag 21 of the embodiment is intended to be used for a single-fiber optical cord having a diameter of 2 mm with a silica glass core. The size of the tag is as follows: the thickness of the flat display section 22 and the neck section 25 is approximately 0.5 mm, the width W1 of the main section 23 of the display section 22 is approximately 27 mm, the width of the subordinate section 24 is approximately 7 mm, and the width of the neck section 25 is approximately 2.5 mm.
The length of the cord-holding section 26 is about 3 mm. In this embodiment, the length of the cord-holding section 26 is the length on the side of two curved walls 26b (the length L in FIG. 15).
Further, in FIGS. 13 or 14, the outside diameter of the cord-holding section 26 is about 2.8 mm, the inside diameter thereof about 1.8 mm, and the width of the opening 26c thereof about 0.6 mm, as seen from the longitudinal direction of the neck section.
It should be noted that a cord-identification tag according to the present embodiment is preferably applied to, in particular, a single-fiber optical cord having a diameter of substantially 2 mm ± 1.0 mm.

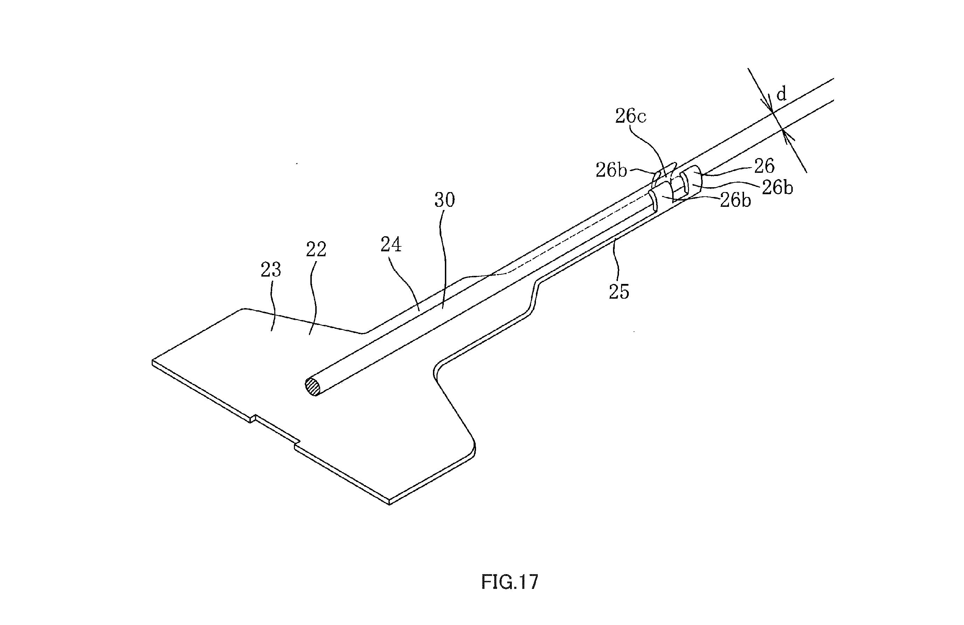

When attaching the aforementioned cord-identification tag 21 to an optical cord, the optical cord is placed between the top sections of the curved walls 26b on both sides. And, the optical cord is pushed lightly into the cord-identification tag 21, or the cord-identification tag 21 is pushed towards the optical cord. Thus, the optical cord is pushed inside the curved walls which have substantially a broken circular shape as seen from the longitudinal direction of the neck section, and the cord is held by the curved walls 26b on both sides arranged in a staggered pattern, in such a manner that the cord will not come off on its own.
In this case, the cord-identification tag 21 is attached to an optical cord 30 along the optical cord 30 as shown in FIG. 17.

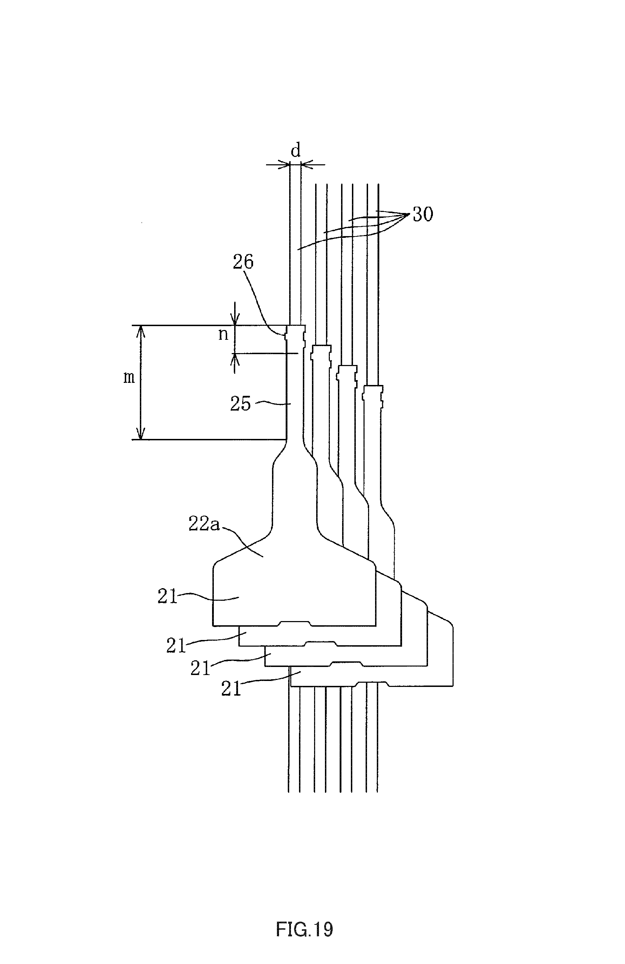

The cord-holding section 26 of the aforementioned cord-identification tag 21 is placed on the end of narrow neck section 25 extending from the display section 26, and is located away from the display section 26. Therefore, the cord-holding section can be smaller than the conventional holding section incorporated in a display section shown in FIG. 23.

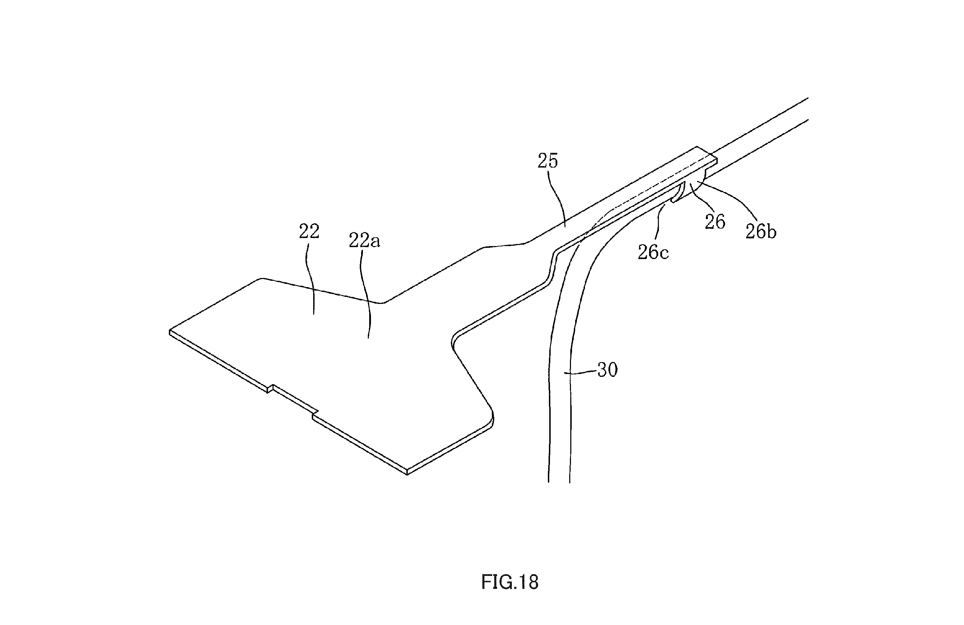

FIG. 18 is a diagram showing one of the conditions in which the cord-identification tag 21 is attached to one of multiple optical cords which are closely placed in and connected to a fiber termination module. As mentioned above, the cord-holding section 26 is small. And, the display section 22 is thin and flat in shape, has a thickness of about 0.5 mm, and is located away from the holding section 26 and connected by the neck section 25. Therefore, when the cord-identification tags are attached to optical cords placed in a high-density manner, the cord-identification tags can be attached in a manner that the display sections substantially overlay one another partially at a position located away from the optical cords (in a manner that the tags are arranged parallel to one another). This can minimize interference from the tags with one another.
Further, for example, when a plurality of optical cords are running parallel to one another, a plurality of the cord-identification tags 21 are attached to the optical cords as shown in FIG. 19 so as to overlap one another in a manner that the display sections overlay one another partially. This makes it possible to prevent the tags from interfering with one another even when the tags are closely placed. In the illustrated example in which the tags are attached to four optical cords, if the length m of the neck section 25 is slightly longer than three times the length n of the cord-holding section 26, the tags can be prevented from interfering with one another. If the length n of the cord-holding section 26 is 1.5d (d = optical cord diameter) and the length m of the neck section 25 is longer than 5d ( = 1.5d x 3 plus), the tags can be prevented from interfering with one another. Generally, when number N of the optical cords are running adjacent and parallel to one another, if the length of the neck section 25 is slightly longer than (N-1) x n, the tags can be prevented from interfering with one another even when the tags are closely placed.
It should be noted that, while the optical cords are running vertically in the illustrated example, the tags can be attached in the aforementioned manner to optical cords which are running horizontally or obliquely, as long as the cords are parallel to one another.
This effect can be satisfactorily achieved when used for thin optical cords which have a diameter d of about 2 mm and are placed in a high-density manner as mentioned in this embodiment.

Further, the cord-holding section 26 includes the curved walls 26b which stand respectively on both sides of the bottom section and which are arranged alternately in the longitudinal direction of the neck section in a staggered pattern, the curved walls having substantially a broken circular shape which has the opening 26c on top thereof as seen from the longitudinal direction of the neck section. Thereby, the following effects can be achieved.
(1) When an optical cord is placed between the top sections of the curved walls 26b on both sides and is pushed lightly, the optical cord is pushed inside the curved walls which have substantially a broken circular shape as seen from the longitudinal direction of the neck section. The cord is held by the curved walls 26b on both sides arranged in a staggered pattern, in such a manner that the cord will not come off on its own. By just pushing an optical cord, the optical cord can be attached to the cord-holding section 26. Therefore, it is easy to attach the tag to an optical cord.
   In this case, curved walls 26b on both sides are placed in a staggered pattern not facing each other. Therefore, even if the space between the top sections of the curved walls 26b on both sides is slightly narrow as seen from the longitudinal direction of the neck section, an optical cord can be easily pressed inside the curved walls. That is, the cord-holding section 26 has the configuration that, while securely holding the optical cord, enables the user to easily attach the tag to the optical cord.
   The curved walls 26b on both sides are arranged in a staggered pattern, one on one side and two on the other side, as mentioned in this embodiment. This configuration is suitable for achieving the abovementioned secure holding and easy attachment structure.
   Further, because the curved walls 26b on both sides are arranged in a staggered pattern, the walls will not clamp the jacket of the optical cord "from both sides." This can minimize deformation (dent) of the jacket of the optical cord. This is effective when the inside diameter of the cord-holding section 26 is small in relation to the diameter d of an optical cord.
(2) In this embodiment, in relation to the diameter d of an optical cord (= 2.0 mm), the inside diameter of the cord-holding section 26 (the inside diameter as seen from the longitudinal direction of the neck section) is about 1.8 mm. If, in this way, the inside diameter of the cord-holding section 26 is designed to be smaller than or equal to the diameter of the optical cord, the inner surface of the cord-holding section holds the optical cord in a spring-like manner. Therefore, the cord-identification tag becomes suitable for use in which the placement of the tag cannot be easily moved.
   Further, in this case, if the force which acts in a spring-like manner is adjusted by adjusting the inside diameter of the cord-holding section, even after attaching the cord-identification tag to an optical cord, the tag can be moved by sliding in the longitudinal direction of the cord.
   For this use, in relation to the diameter d of an optical cord, the inside diameter of the cord-holding section is preferably set to 0.9d x (1 ± 0.05), for example.
(3) Further, if the inside diameter of the cord-holding section (the inside diameter as seen from the longitudinal direction of the neck section) is designed to be larger than the diameter of an optical cord, the cord-identification tag becomes suitable for use in which the placement of the tag can be easily moved.
   In this case, in terms of a relationship to the diameter of an optical cord, the inside diameter of the cord-holding section is preferably set to 1.0d x (1 + 0.05, -0), that is, 2.0-2.1 mm.
(4) The length L of the cord-holding section 26 in the longitudinal direction of an optical cord can be short regardless of the size of the display section 22. This enables the cord-identification tag 21 to be attached to an optical cord which is placed in a curved form.
   An optical cord according to the present embodiment is intended to be used with a minimum bending radius (allowable bending radius) of 15-30 mm. If the length L of the cord-holding section 26 is short, for example 3 mm in the embodiment, a cord-identification tag can be attached to an optical cord at the aforementioned position where the optical cord is bent with an almost minimum bending radius.
   It should be noted that if the length L of the cord-holding section 26 is short, it can be considered that the following will occur. If the display section extends in the radial direction of a cable in similar to the conventional tag shown in FIG. 25, when a force in the longitudinal direction of the cable acts on the display section (for example, in the case of a cable running vertically, the gravitational force of the display section will act as such), the cord-holding section 26 tilts. The tilted, short cord-holding section 26 produces a force to cause an optical cord to be bent locally with a small bending radius. However, in the present embodiment, the optical cord held by the cord-holding section 26 extends from the holding section 26 along the neck section 25. Therefore, the neck section 25 prevents the occurrence of the local bending. That is, in similar to FIG. 19 mentioned above, when optical cords running in the vertical direction, the gravitational force of the cord-identification tag acts on the optical cord along substantially the axial direction, but not acts along the direction in which the optical cord is bent. Therefore, shortening the length of the holding section 26 will not cause the problems of local bending and associated increasing of the transmission loss of the optical fibers.
   It should be noted that, in terms of a relationship to the diameter d of an optical cord, the length L of the cord-holding section is preferably set to about 1.5d x (1 ± 0.2).
(5) By enlarging the space between the curved walls 26b on both sides of the cord-holding section 26 of the cord-identification tag 21 which is attached to an optical cord, the cord-identification tag 21 can be easily removed from the optical cord. Further, it can be considered that depending on conditions the tag 21 is removed by opening only one curved wall 26b.
(6) Because the cord-identification tag 21 can be easily attached to and removed from an optical cord, a used cord-identification tag 21 can be reused as a cord-identification tag for another optical cord when rewiring optical cords, by rewriting the information on the display surface or by replacing the adhesive label on which the cord-identification information is printed with a new one.
(7) The neck section 25, the display section 22 and the like may be thin regardless of the diameter of an optical cord. Therefore, the volume of the entire cord-identification tag can be made relatively small using less resin material, making it resource-saving and also economically cost-effective.
(8) The cord-identification tag 21 has a simple, flat shape on the whole with only the small curved walls in a staggered pattern on substantially an end of a flat plate (display section 22 and neck section 25). Therefore, a mold with which the tag is made as an integrally-molded resin product can be simple and the tag can be easily manufactured.

It should be noted that, in this embodiment, the display surface 22a is the surface on the opposite side of the holding section 26 of the display section 22. However, the surface on the same side as the holding section 26 may be the display surface 22a, and also the both surfaces may be the display surface. For example, when using an adhesive label which is placed on both sides of the display section 22 by folding the label along the end of the wide main section 23, both surfaces can be easily made a display surface.

FIG. 20 is a diagram illustrating how the neck section 25 of the cord-identification tag 21 of the present embodiment is sufficiently flexible. In the illustrated example, in similar to FIG. 19, the cord-identification tags 21 are attached to the four optical cords 30 running in the vertical direction in a manner that the display sections overlay one another partially so as to overlap one another.
The neck section 25 of the cord-identification tag 21 of the present embodiment has a flexibility that enables the display section 22 of a lower cord-identification tag 21(B) to be seen by turning the display section 22 of an upper cord-identification tag 21(A) when the two cord-identification tags 21 overlay each other.
To make a cord-identification tag sufficiently flexible to have the aforementioned characteristics, it is desirable to use a soft material as a resin material for molding the tag, to make the entire body of the tag thin, or to make only the neck section 25 thin or narrow.
Thereby, in the case where the display sections of the cord-identification tags substantially overlay one another, the display section of the lower cord-identification tag can be seen by turning the display section 22 of the upper tag.
Further, when both surfaces of the display section 22 are used as a display surface, the backside display surface can be seen easily.

### Embodiment 4

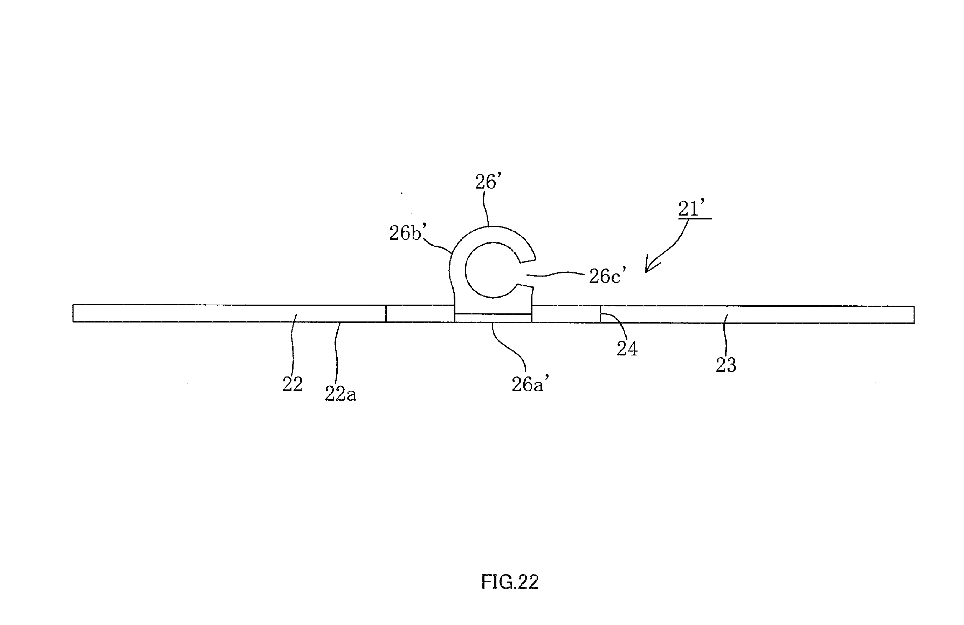

FIGS. 21 and 22 show the cord-identification tag 21' of the other embodiment. FIG. 21 is a magnified perspective view showing the vicinity of the cord-holding section 26' of the cord-identification tag 21', and FIG. 22 is a plan view of the cord-identification tag 21' (corresponding to FIG. 13).
The cord-holding section 26' includes a curved wall 26b' which stands from one side of the bottom section 26a' incorporated in the end of the neck section 25 and extends close to the other side. In addition, the cord-holding section 26' has substantially a broken cylindrical shape whose cylinder-axis direction is parallel to the longitudinal direction of the neck section and has a slit-like opening 26c' on the side thereof.
The components of the cord-identification tag 21' except for the cord-holding section 26' are the same as the cord-identification tag 21 shown in FIGS. 11 to 16. Therefore, the description thereof is omitted.
This cord-identification tag 21' can achieve substantially the same effect as the foregoing cord-identification tag 21.
Further, depending on the wiring arrangement of optical cords, an optical cord can be more easily attached from the side of the identification tag than from the top as seen from the longitudinal direction of the neck section of the tag. Therefore, in this case, the cord-identification tag 21' which has a slit-like opening 26c' on the side thereof is effective.
Further, when placed on the bottom section 26a' and viewing the curved wall 26b' from the longitudinal direction of the neck section, the slit-like opening 26c' of the curved wall 26b' is located on the side (the right side or the left side) of the wall. This makes possible the effect that an optical cord will not easily drop off from the slit-like opening 26c' of a tag even when the display section of the tag is turned too much.
It should be noted that the aforementioned embodiments are for facilitating understanding of the invention, and are not limiting of the invention, and are not to be interpreted as limiting the invention. As a matter of course, the invention can of course be altered and improved without departing from the gist thereof, and equivalents are intended to be embraced therein.

### Reference Signs List

- 21, 21': cord-identification tag
- 22: display section
- 22a: display surface
- 23: main section
- 24: subordinate section
- 25: neck section
- 26, 26': cord-holding section
- 26a: bottom section
- 26b: curved wall
- 26c, 26': opening
- 27: elongated protrusion (projection and recess)
- 30: optical cord

## Claims

1. A cord-identification tag that is attached to an optical cord, comprising:
a flat display section that includes a display surface displaying cord-identification information;
a neck section that extends from the display section parallel to the display surface and whose width is smaller than that of the display section; and
a cord-holding section that is included in an end of the neck section,
wherein
the cord-identification tag is an integrally-molded resin product and
the cord-holding section includes a curved wall having an opening as seen from a longitudinal direction of the neck section.

2. A cord-identification tag according to claim 1, wherein
the neck section has a flexibility that enables the display section to be turned.

3. A cord-identification tag according to claim 2, wherein
the neck section has a flexibility that enables a display section of a lower cord-identification tag to be seen by turning a display section of an upper cord-identification tag when the two cord-identification tags overlay each other.

4. A cord-identification tag according to claim 1, wherein
the curved walls
stand respectively on both sides of a bottom section incorporated in the end of the neck section, and
have substantially a broken cylindrical shape which has a slit-like opening on top thereof and whose cylinder-axis direction is parallel to the longitudinal direction of the neck section.

5. A cord-identification tag according to claim 1, wherein
the curved walls stand respectively on both sides of a bottom section incorporated in the end of the neck section, and
the curved walls on both sides
have substantially a broken circular shape which has an opening on top thereof as seen from the longitudinal direction of the neck section, and are arranged alternately in a staggered pattern in the longitudinal direction of the neck section as seen from a direction perpendicular to the display surface.

6. A cord-identification tag according to claim 5, wherein
the neck section has a flexibility that enables a display section of a lower cord-identification tag to be seen by turning a display section of an upper cord-identification tag when the two cord-identification tags overlay each other.

7. A cord-identification tag according to claim 5, wherein
the curved walls on both sides are arranged in a staggered pattern, one on one side and two on the other side.

8. A cord-identification tag according to claim 1, wherein
when placed on a bottom section that is incorporated in the end of the neck section and viewing the curved wall from the longitudinal direction of the neck section, the opening of the curved wall is located on a side of the curved wall.

9. A cord-identification tag according to claim 8, wherein
the curved wall
stands from one side of the bottom section that is incorporated in the end of the neck section,
extends close to the other side, and
has substantially a broken cylindrical shape which has a slit-like opening on a side thereof and whose cylinder-axis direction is parallel to the longitudinal direction of the neck section.

10. A cord-identification tag according to claim 9, wherein
the neck section has a flexibility that enables a display section of a lower cord-identification tag to be seen by turning a display section of an upper cord-identification tag when the two cord-identification tags overlay each other.

11. A cord-identification tag according to claim 1, wherein
an optical cord which the tag targets has a diameter d of 2 mm ± 1 mm.

12. A cord-identification tag according to claim 11, wherein
an inside diameter of the cord-holding section is 0.9d x (1 ± 0.05) as seen from the longitudinal direction of the neck section.

13. A cord-identification tag according to claim 11, wherein
an inside diameter of the cord-holding section is 1.0d x (1 + 0.05, -0) as seen from the longitudinal direction of the neck section.

14. A cord-identification tag according to claim 11, wherein
a length L of the cord-holding section in a longitudinal direction of the cord is 1.5d x (1 ± 0.2).

15. A cord-identification tag according to claim 11, wherein
a length of the neck section is more than or equal to 5d.

16. A cord-identification tag according to claim 11, wherein
a thickness of the display section is less than or equal to 0.5d.

17. A cord-identification tag according to claim 1, wherein
on a surface of an opposite side of a side on which the cord-holding section of the neck section is formed, either one of a projection and a recess is formed for slip resistance.

18. A method for attaching a cord-identification tag to an optical cord, comprising:
preparing a plurality of the cord-identification tags that is an integrally-molded resin product including
a flat display section that includes a display surface displaying cord-identification information,
a neck section that extends from the display section parallel to the display surface and whose width is smaller than that of the display section,
and
a cord-holding section that is included in an end of the neck section and
includes a curved wall that has an opening as seen from a longitudinal direction of the neck section, and
attaching each of the cord-identification tags to each of a plurality of adjacent optical cords in a manner that the display sections overlay one another partially so as to overlap one another, the plurality of optical cords running parallel to one another.
